# EUROPEAN PATENT APPLICATION

(11) **EP 1 752 521 A1**
(43) Date of publication of application: **14.02.2007**
(21) Application number: 06253826.9
(22) Date of filing: 21.07.2006
(51) Int. Cl.: C10M 173/02, C10M 111/04, C10N 40/00, C10N 40/22, C10N 10/02, C10N 70/00, C10N 20/06

(54) **Aqueous dispersion medium for abrasive particles**

(30) Priority: 25.07.2005 JP 2005213868
(71) Applicant: Yushiro Chemical Industry Co., Ltd., Tokyo 146-8510 (JP)
(72) Inventor: Kikuchi, Shingo c/o Yushiro Chemical Ind. Co. Ltd, Kanagawa 253-0193 (JP); Nakada, Hideto c/o Yushiro Chemical Ind. Co. Ltd, Kanagawa 253-0193 (JP); Ohashi, Yasumasa c/o Yushiro Chemical Ind. Co Ltd, Kanagawa 253-0193 (JP)
(74) Representative: Smart, Peter John

(57) **Abstract**

An aqueous abrasives dispersion medium composition comprising: at least one glycol; at least one glycolether represented by a general formula (1): R²O-(CHR¹CH₂O)ₘ-R³ (1) wherein R¹ represents a hydrogen atom or a methyl group, R² represents a C₁₋₁₈ alkyl group or a C₁₋₁₈ alkenyl group, R³ represents a hydrogen atom, a C₁₋₁₈ alkyl group or a C₁₋₁₈ alkenyl group, and m represents number 1 to 20; and water is provided which is useful for dispersing an abrasive to form a cutting fluid which is stable in respect of dispersion of the abrasive and viscosity and is non-flammable.

## Description

### [Technical Field]

The present invention relates to an aqueous abrasive dispersion medium composition for the use of cutting process, grinding process, polishing process, slicing process, or the like, and relates to aqueous slurry for processing using the aqueous abrasive dispersion medium composition.

### [Background Art]

In cutting process, grinding process, polishing process, and slicing process for the so-called brittle materials such as silicon, quartz, crystal, compound semiconductor, ceramics, glass, metal oxide, cemented carbide, sintered alloy, or the like, a slurry in which abrasives are dispersed in the dispersion medium is often used. During the processing operation, this slurry is provided as a cutting fluid to the cutter blade of processing apparatus.

Previously, as a dispersion medium for slurry, many non-water-soluble dispersion mediums were used, these of which consisted primarily of mineral oil, synthetic oil and the like. However, most of these non-water-soluble dispersion mediums were flammable hazardous material, and therefore had problems of inflammability during the processing and restriction of stockpile under the Fire Defense Law. Nowadays, water-soluble abrasive dispersion mediums become popular.

In general, many of commercially available water-soluble abrasive dispersion medium compositions consist of glycols as base oil, and are designed to have additive agents mainly for dispersing abrasives. Patent Documents 1 to 3, for example, disclose abrasive dispersion medium compositions in which specific additive agents are added in the water-glycol type dispersion mediums. Also, Patent Document 4 discloses an abrasive dispersion medium composition in which organic acid and organic smectite are added in the water-free glycol type dispersion medium.
Patent Document 1: Japanese Patent Application Laid-Open (JP-A) No. 10-81872
Patent Document 2: JP-A No. 10-259396
Patent Document 3: JP-A No. 10-324889
Patent Document 4: JP-A No. 2002-80883

### [Disclosure of the Invention]

### [Problems to be Solved by the Invention]

Among such abrasive dispersion medium compositions using water-glycol type dispersion medium shown in Patent Documents 1 to 3, at the early stage of processing, abrasive dispersion medium compositions having good performance can be obtained, this performance matches that of non-water-soluble abrasive dispersion medium compositions. Nevertheless, many of slurry using these aqueous abrasive dispersion medium compositions have problems in viscosity stability such that, over the time of usage, slurry viscosity increases due to the inclusion of swarf of work and thereby the processing quality of the work is down. Further, in order to avoid inflammability, water volume in the slurry needs to be increased. In case of silicon used for semiconductor substrate being adopted as a processed material, if water volume is increased, water included in the dispersion medium and silicon react each other and thereby hydrogen is generated and the slurry viscosity additionally increases. Thus the available composition for the abrasive dispersion medium compositions is largely restricted.

Non-aqueous abrasive dispersion medium composition disclosed in Patent Document 4 also has a problem such that viscosity of the abrasive dispersion medium composition increases due to the organic acid or organic smectite added thereto. Moreover, when the aqueous abrasive dispersion medium compositions are recycled, the composition of regenerative material is unstable, that makes the recycling thereof difficult. Further, as the non-aqueous abrasive dispersion medium composition disclosed in Patent Document 4 does not include water, it has a problem of inflammability.

Accordingly, an object of the present invention is to provide an aqueous abrasives dispersion medium composition which does not have a problem of inflammability and which is excellent in dispersion stability of abrasives and viscosity stability over the time of usage, and to provide aqueous slurry for processing using the aqueous abrasives dispersion medium composition.

### [Means for Solving the Problems]

The first aspect of the present invention provides an aqueous abrasives dispersion medium composition comprising: glycols; glycolethers represented by a general formula (1): R²O-(CHR¹CH₂O)ₘ-R³ (1); and water, so as to solve the above-mentioned problems.
(In the general formula (1), R¹ represents a hydrogen atom or a methyl group, R² represents an alkyl group or an alkenyl group of carbon number 1 to 18, R³ represents a hydrogen atom, an alkyl group or an alkenyl group of carbon number 1 to 18 , and m represents number 1 to 20.)

The second aspect of the present invention provides an aqueous abrasives dispersion medium composition comprising: glycols; glycolethers represented by a general formula (1): R²O-(CHR¹CH₂O)ₘ-R³ (1); water; and aliphatic polyvalent carboxylic acid alkaline salt, so as to solve the above-mentioned problems.
(In the general formula (1), R¹ represents a hydrogen atom or a methyl group, R² represents an alkyl group or an alkenyl group of carbon number 1 to 18, R³ represents a hydrogen atom, an alkyl group or an alkenyl group of carbon number 1 to 18 , and m represents number 1 to 20.)

In the second aspect of the invention, the content of the aliphatic polyvalent carboxylic acid alkaline salt is preferably from 0.01 to 10% by mass, for 100% by mass of the total mass of the aqueous abrasives dispersion medium composition.

Further, in the first and second aspects of the invention, total content of the glycols and the glycolethers is preferably from 50 to 98% by mass, for 100% by mass of the total mass of the aqueous abrasives dispersion medium composition. Also, content of the water is preferably from 2 to 50% by mass, for 100% by mass of the total mass of the aqueous abrasives dispersion medium composition.

Furthermore, in the first and second aspects of the invention, content ratio of the glycols:glycolethers is preferably from 50:50 to 99:1 on the basis of mass thereof.

According to these inventions, it is possible to provide an aqueous abrasives dispersion medium composition which does not have a problem of inflammability and which is excellent in dispersion stability of abrasives and viscosity stability over the time of usage.

The third aspect of the present invention provides aqueous slurry for processing comprising: an aqueous abrasives dispersion medium composition as described in any one of claims 1 to 6; and abrasives, so as to solve the above-mentioned problems.

According to the invention, it is possible to provide aqueous slurry for processing which does not have a problem of inflammability and which is excellent in dispersion stability of abrasives and viscosity stability over the time of usage.

The fourth aspect of the present invention provides a method for cutting process, grinding process, polishing process, or slicing process by using aqueous slurry for processing as described in claim 7, so as to solve the above-mentioned problems.

The fifth aspect of the present invention provides a method for wire-saw process or band-saw process by using aqueous slurry for processing as described in claim 7, so as to solve the above-mentioned problems.

In the fourth and fifth aspects of the invention, the processed material is any one of materials selected from the group consisting of silicon, quartz, crystal, compound semiconductor, ceramics, glass, metal oxide, cemented carbide, and sintered alloy.

According to the fourth and fifth aspects of the invention, it is possible to provide processing methods which are excellent in safety and workability.

### [Effects of the Invention]

With respect to the conventional aqueous abrasive dispersion medium composition designed with glycols and additive agents, the additive agents largely contribute to the mixture and dispersion of the abrasives. However slurry viscosity increases due to the inclusion of swarf over the time of usage, quality falls inevitably. An aqueous abrasive dispersion medium composition of the present invention makes it possible to stably disperse abrasives, but also to inhibit the increase of slurry viscosity by containing glycolethers. Therefore, the aqueous abrasives dispersion medium composition of the invention can maintain the initial excellent quality. Further, the water added in the aqueous abrasive dispersion medium composition has an effect to inhibit the danger of inflammability, but also has effects of cooling heat generated during the cutting and inhibiting the increase of viscosity. Thus, using glycolethers and water at the same time makes it possible to produce an excellent aqueous abrasive dispersion medium composition.

Such effects and advantages of the inventions will be made apparent from the best mode for carrying out the invention, which will be described as follows.

### [Best Mode for Carrying Out the Invention]

An aqueous abrasive dispersion medium composition of the present invention includes glycols, glycolethers represented by a general formula (1), and water. Glycols used in the invention is not particularly limited. Examples of the glycols include: ethyleneglycol, propyleneglycol, diethyleneglycol, triethyleneglycol, tetraethyleneglycol, butyleneglycol, hexyleneglycol, glycerine, 1,3-propanediol, 1,4-butanediol, 1,6-hexanediol, polyethyleneglycol, polypropyleneglycol, and other polyalkyleneglycol. Among them, propyleneglycol and diethyleneglycol are particularly preferable. These may be used alone or in combination with two or more thereof.

As glycolethers, glycolethers represented by the general formula (1): R²O-(CHR¹CH₂O)ₘ-R³ (1) is used.

In the general formula (1), R¹ represents a hydrogen atom or a methyl group, R² represents an alkyl group or an alkenyl group of carbon number 1 to 18 , R³ represents a hydrogen atom, an alkyl group or an alkenyl group of carbon number 1 to 18 , and m represents number 1 to 20. Examples of the compound represented by the general formula (1) include: diethyleneglycol monomethylether, diethyleneglycol monoethylether, diethyleneglycol monopropylether, diethyleneglycol monobutylether, diethyleneglycol dimethylether, diethyleneglycol diethylether, diethyleneglycol dipropylether, diethyleneglycol dibutylether, dipropyleneglycol monomethylether, dipropyleneglycol monoethylether, dipropyleneglycol monopropylether, dipropyleneglycol monobutylether, dipropyleneglycol dimethylether, dipropyleneglycol diethylether, dipropyleneglycol dipropylether, dipropyleneglycol dibutylether, triethyleneglycol monomethylether, triethyleneglycol monoethylether, triethyleneglycol monopropylether, triethyleneglycol monobutylether, triethyleneglycol dimethylether, triethyleneglycol diethylether, triethyleneglycol dipropylether, triethyleneglycol dibutylether, tripropyleneglycol monomethylether, tripropyleneglycol monoethylether, tripropyleneglycol monopropylether, tripropyleneglycol monobutylether, tripropyleneglycol dimethylether, tripropyleneglycol diethylether, tripropyleneglycol dipropylether, and tripropyleneglycol dibutylether. Among them, diethyleneglycol monobutylether, diethyleneglycol dimethylether, and triethyleneglycol monoethylether are particularly preferable. These may be used alone or in combination with two or more thereof.

In the aqueous abrasive dispersion medium composition of the present invention, total content of the glycols and the glycolethers is preferably from 50 to 98% by mass, for 100% by mass of the total mass of the aqueous abrasive dispersion medium composition, more preferably from 85 to 98% by mass. Content ratio of the glycols:glycolethers is preferably from 50:50 to 99:1 on the basis of mass thereof.

As water, any one of water selected from the group consisting of industrial water, tap water, deionized water and distillated water can be used. Among them, distillated water which is free from impurity is preferable, and deionized water is more preferable. Content of the water in the aqueous abrasive dispersion medium composition of the present invention, from the view point of prevention of inflammability and inhibition of increasing viscosity, is preferably from 2 to 50% by mass, more preferably from 2 to 15% by mass, for 100% by mass of the total mass of the aqueous abrasive dispersion medium composition.

An aqueous abrasive dispersion medium composition of the present invention preferably includes glycols, glycolethers represented by the general formula (1), water, and aliphatic polyvalent carboxylic acid alkaline salt. Examples of aliphatic polyvalent carboxylic acid, in particular, include citric acid and oxalic acid. Also, examples of alkali constitutes alkali salt include sodium, potassium, amine, and the like. As aliphatic polyvalent carboxylic acid alkaline salt, potassium citrate is particularly preferable. These may be used alone or in combination with two or more thereof. In the aqueous abrasive dispersion medium composition of the invention, the content of the aliphatic polyvalent carboxylic acid alkaline salt is preferably from 0.01 to 10% by mass, for 100% by mass of the total mass of the aqueous abrasive dispersion medium composition. When the above constituents are included in the aqueous abrasive dispersion medium composition, aliphatic polyvalent carboxylic acid alkaline salt itself can be added, alternatively, the raw materials thereof, i.e. aliphatic polyvalent carboxylic acid and alkali metal hydroxide or amine can be added at the same time. In that case, it is not necessary to add the equivalent amount between the aliphatic polyvalent carboxylic acid and alkali metal hydroxide or amine; it is possible to add aliphatic polyvalent carboxylic acid excessively to the alkali metal hydroxide or amine.

The aqueous abrasive dispersion medium composition of the invention is made into aqueous slurry for processing by mixing and homogenously dispersing abrasives made of such as SiC. Aqueous slurry of the invention is preferably used for cutting process, grinding process, polishing process, or slicing process; and it is used as cutting fluid provided to the cutter blade during the processing of silicon, quartz, crystal, compound semiconductor, ceramics, glass, metal oxide, cemented carbide, and sintered alloy, and the like. Examples of the cutting apparatus, which particularly realizes the effects of the aqueous abrasive dispersion medium composition of the invention and aqueous slurry for processing using thereof, include wire saw, band saw, multi-wire saw and multi-band saw both of which are respectively multiplexed with wire saw and band saw.

### [Examples]

Hereinafter, the invention will be more specifically described by way of the following examples. Aqueous abrasive dispersion medium compositions of the present invention (Examples 1 to 4) and aqueous abrasive dispersion medium composition other than the present invention (Comparative Examples 1 to 4) were prepared in accordance with the composition shown in Table 1. Next, for 1L of the above-mentioned respective aqueous abrasive dispersion medium compositions, 1 kg of GC abrasives (#1500) was added, and then aqueous slurry for processing was obtained by stirring with stirrer at 1000rpm for 1 hour. Numbers shown in Table 1 corresponding to the individual constituent is based on parts by mass.

**Table 1**

| | Example 1 | Example 2 | Example 3 | Example 4 | Comparative Example 1 | Comparative Example 2 | Comparative Example 3 | Comparativge Example 4 |
|---|---|---|---|---|---|---|---|---|
| Propyleneglycol | 70 | - | - | 85 | 100 | - | - | 85 |
| Diethyleneglycol | - | 70 | 80 | - | - | 90 | - | - |
| Polyethyleneglycol 200 | - | - | - | - | - | - | 85 | - |
| Triethyleneglycol monoethylether | 20 | - | 10 | - | - | - | - | - |
| Diethyleneglycol dimethylether | - | 10 | - | - | - | 10 | - | - |
| Diethyleneglycol monobutylether | - | | - | 5 | - | - | - | - |
| Water | 9 | 19 | 10 | 10 | - | - | 15 | 14 |
| Citric acid | 1 | 2 | - | - | - | - | - | 1 |
| Potassium hydroxide | 0.5 | 1 | - | - | - | - | - | 0.5 |

To the above-prepared respective aqueous slurry for processing, 10% by mass of silicon powder (particle diameter 1 to 2µm) was added and stirred, then slurry viscosity (η0) was measured. Next, stainless steel balls (diameter 2mm) were added to the slurry, stirred at 1000rpm for 10 hours to grind silicon powder, after that, filtered the stainless steel balls by wire cloth (50 mesh), and measured the slurry viscosity (η1). Also, the aqueous slurry for processing were taken in the vessel (200ml beaker) after the production and left in still standing for 24 hours. Then, check for hard caking of the aqueous slurry caused by the settling of abrasives were observed. The result is shown in Table 2.

**Table 2**

| | | Example 1 | Example 2 | Example 3 | Example 4 | Comparative Example 1 | Comparative Example 2 | Comparative Example 3 | Comparative Example 4 |
|---|---|---|---|---|---|---|---|---|---|
| Slurry viscosity | η0 | 120 | 150 | 170 | 185 | 280 | 300 | 260 | 220 |
| (25°C) (mPa·s) | η1 | 125 | 150 | 170 | 190 | 380 | 410 | 420 | 360 |
| Hard Cakeing | | None | None | None | None | Caking | Slightly caking | Caking | Caking |

As seen from Table 2, aqueous slurry for processing of the Comparative Examples largely changed the viscosity thereof before and after the grinding of silicon. On the other hand, aqueous slurry for processing of the invention did hardly change the viscosity thereof before and after the grinding of silicon; it was excellent in viscosity stability over the time of usage. Moreover, aqueous slurry for processing of the invention did not form hard caking, thus it was excellent in dispersion stability of abrasives.

The above has described the present invention associated with the most practical and preferred embodiments thereof. However, the invention is not limited to the embodiments disclosed in the specification. Thus, the invention can be appropriately varied as long as the variation is not contrary to the subject substance and conception of the invention which can be read out from the claims and the whole contents of the specification. It should be understood that an aqueous abrasive dispersion medium composition and aqueous slurry for processing using thereof with such an alternation are included in the technical scope of the invention.

## Claims

1. An aqueous abrasive dispersion medium composition comprising: at least one glycol; at least one glycolether represented by a general formula (1): R²O-(CHR¹CH₂O)ₘ-R³ (1) wherein R¹ represents a hydrogen atom or a methyl group, R² represents a C₁₋₁₈ alkyl group or a C₁₋₁₈ alkenyl group, R³ represents a hydrogen atom, a C₁₋₁₈ alkyl group or a C₁₋₁₈ alkenyl group, and m represents number 1 to 20; and water.

2. An aqueous abrasive dispersion medium composition according to claim 1, further at least one aliphatic polyvalent carboxylic acid alkaline salt.

3. An aqueous abrasive dispersion medium composition according to claim 2, wherein the content of said at least one aliphatic polyvalent carboxylic acid alkaline salt is from 0. 01 to 10% by mass of the total aqueous abrasive dispersion medium composition.

4. An aqueous abrasive dispersion medium composition according to any one of claims 1 to 3, wherein the total combined content of said at least one glycol and said at least one glycolether is from 50 to 98% by mass of the total aqueous abrasive dispersion medium composition.

5. An aqueous abrasive dispersion medium composition according to any one of claims 1 to 4, wherein the content of said water is from 2 to 50% by mass of the total aqueous abrasive dispersion medium composition.

6. An aqueous abrasive dispersion medium composition according to any one of claims 1 to 5, wherein the content ratio of said at least one glycol:said at least one glycolether is from 50:50 to 99:1 by mass.

7. An aqueous abrasive dispersion comprising: an aqueous abrasive dispersion medium composition as described in any one of claims 1 to 6; and at least one abrasive.

8. The use of an aqueous abrasive dispersion according to claim 7 in a process of cutting, grinding, polishing, or slicing.

9. The use of an aqueous abrasive dispersion according to claim 7 in a wire-saw or band-saw process.

10. The use according to claim 8 or 9, wherein said process is carried out on a silicon, quartz, crystal, compound semiconductor, ceramics, glass, metal oxide, cemented carbide, or sintered alloy workpiece.

11. A method of cutting, grinding, polishing or slicing a workpiece, wherein an aqueous abrasive dispersion according to claim 7 is applied as a cutting fluid.
